(19) Europäisches Patentamt
European Patent Office
Office européen des brevets

(11) **EP 4 332 156 A1**

(12) **EUROPEAN PATENT APPLICATION**
published in accordance with Art. 153(4) EPC

(43) Date of publication:
**06.03.2024 Bulletin 2024/10**

(21) Application number: **22795654.7**

(22) Date of filing: **21.04.2022**

(51) International Patent Classification (IPC):
***C08J 11/08*** (2006.01)   ***C09B 67/54*** (2006.01)

(52) Cooperative Patent Classification (CPC):
**C08J 11/08; C09B 67/0096;** Y02W 30/62

(86) International application number:
**PCT/JP2022/018352**

(87) International publication number:
**WO 2022/230741 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021 JP 2021074932**

(71) Applicant: **DIC Corporation
Tokyo 174-8520 (JP)**

(72) Inventor: **YASUI Kengo
Tokyo 103-8233 (JP)**

(74) Representative: **TBK
Bavariaring 4-6
80336 München (DE)**

(54) **METHOD FOR SEPARATING COLORED RESIN COMPOSITION, AND RESIN RECYCLING METHOD**

(57)    A method for separating a colored resin composition is provided, which can easily separate a colored resin composition into a color pigment and a resin and can implement energy-saving and efficient material recycling. In the method for separating a colored resin composition, a resin is dissolved from a colored resin composition containing a condensed polycyclic organic pigment and/or carbon black into a liquefied solvent containing one or two or more of liquid dimethyl ether, liquid propane, and liquid butane, and the condensed polycyclic organic pigment and/or carbon black and the resin are separated.

EP 4 332 156 A1

## Description

Technical Field

The present invention relates to a method for separating a colored resin composition and a resin recycling method.

Background Art

Recycling of resins such as plastic materials is promoted through methods such as material recycling, chemical recycling, and thermal recycling. Among these methods, thermal recycling is an easy method but produces carbon dioxide gas, which contributes to global warming unless materials are carbon neutral. In chemical recycling, efficient conversion into raw materials is necessary, but energy consumption is wasteful because products converted from fossil fuels to basic chemicals and then to polymers by applying energy are turned back into basic chemicals by applying additional energy. Material recycling is therefore considered to be the most efficient method among the above three methods. However, the plastics used in various products cover a wide range, including polyethylene, polypropylene, polyethylene terephthalate (PET), polystyrene, (meth)acrylic resin, and ABS resin, and it is necessary to sort them. Before that, it is necessary to build a social infrastructure and a social system to recover plastic materials.

Even in the case of sorted and recovered plastic materials, plastic materials are not always colorless, and some plastic materials are variously colored. Methods of coloring a plastic material include coloring a surface with plastic paint, and coloring a plastic material by blending a pigment during or before molding. The former method can recover the plastic material as a material if the surface coating film can be removed, whereas with the latter method, it is difficult to remove the color pigment blended in the plastic material. If the color pigment remains in the plastic material, the color pigment is concentrated each time the plastic material is recycled, and it is feared that the physical properties of the plastic material will deteriorate as the color pigment becomes more concentrated.

If the color pigment remains in the plastic material, various colors are mixed in recycling of plastic materials, resulting in a color that approaches black by subtractive mixture. This leads to degradation of the design of products. It is difficult to create a plastic material with high color saturation from a black plastic material with low brightness, and it is naturally impossible to make a colorless or transparent plastic material. In this respect, colored plastic materials are difficult to recycle.

Conventionally, as a method of producing an organic pigment, a method for obtaining an organic pigment by bringing a crude organic pigment into contact with liquefied dimethyl ether is disclosed (PTL 1).

Further, it is disclosed that when a mixture containing at least one resin selected from the group consisting of polystyrene resins and polyethylene terephthalate and a polyolefin resin is treated using a solvent containing as a main component a compound selected from the group consisting of water-soluble amide compounds and water-soluble lactone compounds in which a carbon atom is bonded to each of three bonds of a nitrogen atom, or a solvent containing as main components the above compound and a water-soluble glycol ether compound with 5 to 8 carbon atoms, the polystyrene resin and the polyethylene terephthalate are dissolved into this solvent while the polyolefin resin is not dissolved, whereby they can be separated (PTL 2).

Citation List

Patent Literature

PTL 1: Japanese Unexamined Patent Application Publication No. 2018-016741
PTL 2: Japanese Patent No. 3972516

Summary of Invention

Technical Problem

Unfortunately, PTL 1 discloses that a crude organic pigment is brought into contact with liquefied dimethyl ether to obtain an organic pigment but does not teach a method for separating a colored resin composition into a color pigment and a resin.

PTL 2 discloses that an organic solvent containing a compound selected from the group consisting of water-soluble amide compounds and water-soluble lactone compounds is used to separate different kinds of resins, namely, a polystyrene resin or polyethylene terephthalate and a polyolefin resin, but does not teach a method for separating a colored resin composition into a color pigment and a resin.

An object of the present invention is to provide a method for separating a colored resin composition and a resin recycling method that can easily separate a colored resin composition into a color pigment and a resin and can implement energy-saving and efficient material recycling.

Solution to Problem

As a result of elaborate studies, the inventor of the present invention has found that when a liquefied solvent containing liquid dimethyl ether and/or liquid propane is used and a colored resin composition containing a condensed polycyclic organic pigment and/or carbon black is mixed with the liquefied solvent, the resin in the colored resin composition dissolves, while the condensed polycyclic organic pigment and/or carbon black does not dissolve, whereby the condensed polycyclic organic pigment and/or carbon black and the resin can be easily separated. It has also been found that the liquid dimethyl ether and/or liquid propane in the liquefied solvent is easily vaporized by releasing the pressure of or heating, under normal pressure, the liquefied solvent containing the colored resin composition, whereby the organic solvent and the resin are easily separated and it is no longer necessary to recover the organic solvent by evaporation using energy, thereby achieving energy saving.

It has also been found that liquid dimethyl ether and/or liquid propane can be easily obtained by recovering the vaporized dimethyl ether and/or propane and pressurizing or cooling them, and thus the liquid dimethyl ether and/or liquid propane can be easily reused as a liquefied solvent. It has also been found that since the separated resin does not contain the condensed polycyclic organic pigment or carbon black, the resulting resin can be reused as it is as a material for a resin composition, and low-cost, energy-saving, and efficient material recycling can be implemented.

More specifically, the present invention provides the following configuration.

[1] A method for separating a colored resin composition, the method including dissolving a resin from a colored resin composition containing a condensed polycyclic organic pigment and/or carbon black into a liquefied solvent containing one or two or more of liquid dimethyl ether, liquid propane, and liquid butane, and separating the condensed polycyclic organic pigment and/or carbon black and the resin.

[2] The method for separating a colored resin composition according to [1] above, in which the condensed polycyclic organic pigment is composed of one or two or more selected from phthalocyanine pigments, quinacridone pigments, dioxazine pigments, perylene pigments, perinone pigments, isoindolinone pigments, isoindoline pigments, thioindigo pigments, anthraquinone pigments, quinophthalone pigments, diketopyrrolopyrrole pigments, and metal complex pigments.

[3] The method for separating a colored resin composition according to [1] or [2] above, the method including:

a step of liquefying one or both of gaseous dimethyl ether and gaseous propane under pressure to generate the liquefied solvent containing one or both of liquid dimethyl ether and liquid propane as a main component;
a step of bringing the liquefied solvent into contact with the colored resin composition to dissolve the resin in the colored resin composition into the liquefied solvent; and
a step of vaporizing one or both of liquid dimethyl ether and liquid propane contained in the liquefied solvent in which the resin is dissolved, under pressure release, to leave the resin.

[4] The method for separating a colored resin composition according to any one of [1] to [3] above, in which the liquefied solvent is composed of one or both of liquid dimethyl ether and liquid propane.

[5] The method for separating a colored resin composition according to [4] above, in which the liquefied solvent is generated at a pressure of 0.1 MPa or more and 1.0 MPa or less.

[6] The method for separating a colored resin composition according to any one of [1] to [5] above, in which one or two or more of gaseous dimethyl ether, gaseous propane, and gaseous butane obtained by vaporizing one or two or more of the liquid dimethyl ether, the liquid propane, and the liquid butane are refluxed and used as one or two or more of liquid dimethyl ether, liquid propane, and liquid butane in the step of producing the liquefied solvent.

[7] A resin recycling method in which a new resin composition is produced using a resin obtained by the method for separating a colored resin composition according to any one of [1] to [6] above.

[8] The resin recycling method according to [7] above, in which the new resin composition is a colored resin composition.

Advantageous Effects of Invention

The present invention can easily separate a colored resin composition into a color pigment and a resin and can implement energy-saving and efficient material recycling. Brief Description of Drawings
FIG. 1 is a schematic diagram illustrating an example of a separation device for performing a method for separating a colored resin composition according to the present embodiment.
FIG. 2 is a graph illustrating a saturation vapor pressure curve of dimethyl ether which is an example of a liquefied solvent used in the present embodiment.
FIG. 3 is a schematic diagram illustrating a modification of the separation device of FIG. 1.
FIG. 4 is a schematic diagram illustrating another modification of the separation device of FIG. 1. Description of Embodiments

Embodiments of the present invention will be described in detail below with reference to the drawings. In the drawings used in the following description, the characteristic parts may be enlarged for the sake of convenience in order to make the characteristics easier to understand, and the dimensional ratio of each component may differ from the actual one.

<Method for Separating Colored Resin Composition>

In a method for separating a colored resin composition according to the present embodiment, a resin is dissolved from a colored resin composition containing a condensed polycyclic organic pigment and/or carbon black into a liquefied solvent containing one or two or more of liquid dimethyl ether, liquid propane, and liquid butane (hereinafter also simply referred to as liquefied solvent), and the condensed polycyclic organic pigment and/or carbon black and the resin are separated.

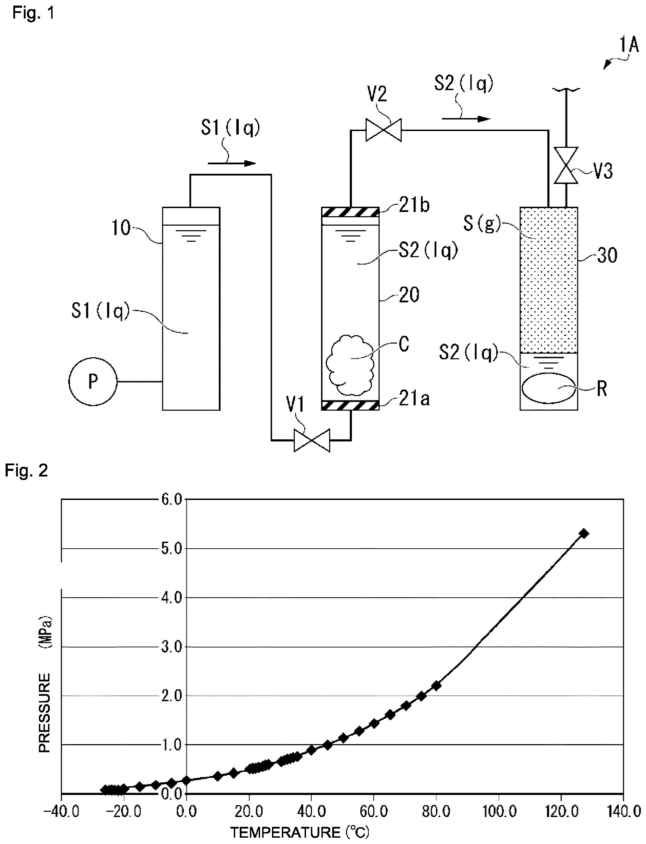

FIG. 1 is a schematic diagram illustrating an example of a separation device for performing the method for separating a colored resin composition according to the present embodiment. In the present embodiment, an example in which liquid dimethyl ether or liquid propane is used as the liquefied solvent will be described.

As illustrated in FIG. 1, a separation device 1A includes a supply section 10 that supplies a liquefied solvent S1 composed of liquid dimethyl ether or liquid propane to a treatment section described below, a treatment section 20 that stores a colored resin composition C to be treated and treats the colored resin composition C with the liquefied solvent S1 supplied from the supply section 10, and a recovery section 30 that recovers a resin-containing liquefied solvent S2 supplied from the treatment section 20.

In the supply section 10, gaseous dimethyl ether or gaseous propane is liquefied under pressure to generate the liquefied solvent S1 composed of liquid dimethyl ether or liquid propane. The supply section 10 is preferably provided at a stage preceding the treatment section 20 in a state of being communicatively connected to the treatment section 20 in an airtight, liquid-tight manner. In the supply section 10, dimethyl ether is liquefied by applying pressure to gaseous dimethyl ether supplied from the outside of the device, using a pump P under a pressurizing condition according to a set temperature (heating temperature) in the supply section 10. A known pressure pump or the like can be used as the pump P.

The supply section 10 is preferably a pressure-resistant container made of metal or the like and should have performance that can withstand an internal pressure of, for example, 20 MPa or less, preferably 10 MPa or less, depending on the composition of the liquefied solvent. The pump P feeds the liquid dimethyl ether or liquid propane generated in the supply section 10 to the treatment section 20.

When the liquefied solvent S1 composed of one or both of liquid dimethyl ether and liquid propane is generated in the supply section 10, it is preferable that the liquefied solvent S1 be generated, for example, at a pressure of 0.1 MPa or more and 1.0 MPa or less. In this manner, the solvent can be liquefied at a lower pressure, compared to other organic solvents for polymers and the like or liquefied solvents composed of supercritical carbon dioxide and the like. The pressurization method is not limited, and a known common pressure pump or the like can be used as the pump P. When the liquefied solvent S1 composed of one or both of liquid dimethyl ether and liquid propane is generated, the liquefied solvent S1 may be generated at a pressure outside the above pressure range, depending on other conditions, such as under a temperature condition other than normal temperature.

In the treatment section 20, the liquefied solvent S1 is brought into contact with the colored resin composition C to dissolve the resin in the colored resin composition C into the liquefied solvent S1. The supply section 10 and the treatment section 20 are communicatively connected in an airtight, liquid-tight manner and are under similar heating and pressurizing conditions. The dimethyl ether or propane liquefied in the supply section 10 therefore can be kept in a liquid state when coming into contact with the colored resin composition C in the treatment section 20.

The treatment section 20 is preferably a pressure-resistant container made of metal or the like and should have performance that can withstand an internal pressure of, for example, 20 MPa or less, preferably 10 MPa or less, depending on the composition of the liquefied solvent, in the same manner as the supply section 10. It is preferable that a filter 21a be provided on the inlet side of the treatment section 20 and a filter 21b be provided on the outlet side to remove impurities and the like from the liquefied solvent when the liquefied solvent passes through the filters.

When treatment is performed in the treatment section 20, for example, the colored resin composition C such as colored plastic products is placed inside the treatment section 20, then the inside of the treatment section 20 is sealed, the liquefied solvent S1 is supplied from the supply section 10 to the treatment section 20 with a valve V1 opened and a valve V2 closed, and once the treatment section 20 is filled with the liquefied solvent S1, the valve V1 is closed. After a predetermined time has elapsed, both of the valves V1 and V2 are opened, and the resin-containing liquefied solvent S2 is supplied from the treatment section 20 to the recovery section 30.

For example, when the liquefied solvent S1 is composed of liquid dimethyl ether, the conditions of temperature and pressure under which liquid dimethyl ether is brought into contact with the colored resin composition C are not limited as long as dimethyl ether is in a liquid state. According to the liquidus line of the liquid dimethyl ether described above, for example, it is more preferable to select temperature and pressure from a temperature range of 10 to 85°C and a pressure range of 0.3 to 2.7 MPa, in that the treatment can be performed without heating or with relatively little heating and in a less pressure-resistant treatment container. Among others, it is particularly preferable to select temperature and pressure from a temperature range of 10 to 40°C and a pressure range of 0.3 to 0.9 MPa, in terms of high energy saving and ease of temperature pressure control and the like, in addition to the above advantage.

When the liquefied solvent S1 is composed of liquid dimethyl ether, the amount of liquid dimethyl ether used is not limited as long as the resin can be separated from the colored resin composition C, and can be 10 to 1000 parts per mass equivalent of the colored resin composition C, or can be 10 to 500 parts.

When the liquefied solvent S1 is composed of liquid dimethyl ether, the contact time between the liquefied solvent S1 and the colored resin composition C is not limited and, for example, can be 0.5 to 48.0 hours, or can be 1.0 to 24.0 hours. The required amount of liquid dimethyl ether may be used in fractional amounts, in which liquid dimethyl ether may be used little by little and brought into contact with the colored resin composition C multiple times. Alternatively, liquid dimethyl ether more than the required amount may be used, in which a larger amount of liquid dimethyl ether can be brought into contact with a certain amount of the colored resin composition C, thereby further reducing the contact time.

In the residue left in the treatment section 20, the condensed polycyclic organic pigment and/or carbon black is concentrated, compared to the colored resin composition C. The condensed polycyclic organic pigment and/or carbon black can be extracted from this residue and then reused as a pigment in a colored resin composition to be newly produced.

In the recovery section 30, liquid dimethyl ether or liquid propane contained in the liquefied solvent in which the resin is dissolved, that is, the resin-containing liquefied solvent S2, is vaporized under pressure release to leave a resin R. The treatment section 20 and the recovery section 30 are communicatively connected in an airtight, liquid-tight manner, and the resin-containing liquefied solvent S2 generated in the treatment section 20 can be kept in a liquid state when supplied into the recovery section 30.

The recovery section 30 is preferably a pressure-resistant container made of metal or the like and should have performance that can withstand an internal pressure of, for example, 20 MPa or less, preferably 10 MPa or less, depending on the composition of the liquefied solvent.

When recovery is performed in the recovery section 30, for example, with the valve V2 opened and a valve V3 closed, the resin-containing liquefied solvent S2 is supplied into the recovery section 30, and then the valve V2 is closed and the valve V3 is opened. Subsequently, for example, the inside of the recovery section 30 is brought to normal temperature and pressure, so that the liquid dimethyl ether or liquid propane in the resin-containing liquefied solvent S2 is vaporized. The vaporized dimethyl ether or propane is discharged to the outside of the recovery section 30 through the valve V3. On the other hand, the resin in the resin-containing liquefied solvent S2 is deposited as the resin R in the recovery section 30. The resin R deposited in the recovery section 30 does not contain the condensed polycyclic organic pigment or carbon black, and the resin R has a composition equivalent to that of the resin used as a raw material of the colored resin composition C.

Thus, as a resin recycling method, a new colored resin composition can be produced using the resin R obtained by the method for separating a colored resin composition described above. Since the resin R obtained by the method for separating a colored resin composition described above is colorless, a new colored resin composition with high color saturation can be produced using the resulting resin R. Furthermore, not only a colored resin composition of the same color but also a new colored resin composition of a different color can be produced. Furthermore, since the resin R contains almost no condensed polycyclic organic pigment, deterioration in physical properties such as strength of the newly produced colored resin composition can be prevented even in repeated reuse of the resin R. The resulting resin R therefore can be recycled to produce colored resin compositions of satisfactory quality in various colors.

[Colored Resin Composition]

The colored resin composition used in the present embodiment contains a resin, and a condensed polycyclic organic pigment and/or carbon black. The colored resin composition may contain only a condensed polycyclic organic pigment as a colorant, may contain only carbon black, or may contain both a condensed polycyclic organic pigment and carbon black.

(Condensed Polycyclic Organic Pigment)

The condensed polycyclic organic pigment used in the present invention means an organic pigment with a cyclic structure having benzene rings or heterocyclic rings, among organic pigments. The condensed polycyclic organic pigment is less soluble in the liquefied solvent used in the present invention and can be easily separated from the resin in a separation process.

For example, the condensed polycyclic organic pigment is composed of one or two or more selected from phthalocyanine pigments, quinacridone pigments, dioxazine pigments, perylene pigments, perinone pigments, isoindolinone pigments, isoindoline pigments, thioindigo pigments, anthraquinone pigments, quinophthalone pigments, diketopyrrolopyrrole pigments, and metal complex pigments.

Specific examples of the condensed polycyclic organic pigment include the followings:

phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 15:6, C.I. Pigment Blue 16, C.I. Pigment Blue 17, C.I. Pigment Blue 75, C.I. Pigment Blue 79, C.I. Pigment Green 7, C.I. Pigment Green 36, C.I. Pigment Green 58, C.I. Pigment Green 59, C.I. Pigment Green 62, and C.I. Pigment Green 63;

quinacridone pigments such as C.I. Pigment Violet 19, C.I. Pigment Violet 42, C.I. Pigment Violet 55, C.I. Pigment Red 122, C.I. Pigment Red 202, C.I. Pigment Red 206, C.I. Pigment Red 207, C.I. Pigment Red 209, C.I. Pigment Orange 48, and C.I. Pigment Orange 49;

dioxazine pigments such as C.I. Pigment Violet 23, C.I. Pigment Violet 34, C.I. Pigment Violet 35, C.I. Pigment Violet 37, and C.I. Pigment Blue 80;

perylene pigments such as C.I. Pigment Red 123, C.I. Pigment Red 149, C.I. Pigment Red 178, C.I. Pigment Red 179, C.I. Pigment Red 190, C.I. Pigment Red 224, C.I. Pigment Violet 29, C.I. Pigment Black 31, and C.I. Pigment Black 32;

perinone pigments such as C.I. Pigment Orange 43 and C.I. Pigment Red 194;

isoindolinone pigments such as C.I. Pigment Yellow 109, C.I. Pigment Yellow 110, C.I. Pigment Yellow 173, C.I. Pigment Yellow 179, C.I. Pigment Orange 61, and C.I. Pigment Brown 38;

isoindoline pigments such as C.I. Pigment Yellow 139, C.I. Pigment Yellow 185, C.I. Pigment Orange 66, C.I. Pigment Orange 69, and C.I. Pigment Red 260;

thioindigo pigments such as C.I. Pigment Red 88, C.I. Pigment Red 181, C.I. Pigment Red 279, C.I. Pigment Violet 36, and C.I. Pigment Violet 38;

anthraquinone pigments such as C.I. Pigment Red 83, C.I. Pigment Red 89, C.I. Pigment Red 168, C.I. Pigment Red 177, C.I. Pigment Red 182, C.I. Pigment Red 216, C.I. Pigment Red 226, C.I. Pigment Red 251, C.I. Pigment Red 263, C.I. Pigment Blue 60, C.I. Pigment Yellow 24, C.I. Pigment Yellow 99, C.I. Pigment Yellow 108, C.I. Pigment Yellow 123, C.I. Pigment Yellow 199, C.I. Pigment Violet 31, C.I. Pigment Orange 40, C.I. Pigment Orange 51, C.I. Pigment Violet 5:1, and C.I. Pigment Black 20;

quinophthalone pigments such as C.I. Pigment Yellow 138 and C.I. Pigment Yellow 231;

diketopyrrolopyrrole pigments such as C.I. Pigment Orange 71, C.I. Pigment Orange 73, C.I. Pigment Orange 81, C.I. Pigment Red 254, C.I. Pigment Red 255, C.I. Pigment Red 264, C.I. Pigment Red 270, and C.I. Pigment Red 272; and metal complex pigments such as C.I. Pigment Yellow 117, C.I. Pigment Yellow 129, C.I. Pigment Yellow 150, C.I. Pigment Yellow 153, C.I. Pigment Orange 65, C.I. Pigment Orange 68, C.I. Pigment Red 257, C.I. Pigment Red 271, C.I. Pigment Green 8, and C.I. Pigment Green 10.

The condensed polycyclic organic pigment may be a commercially available product or may be a product produced by known methods. The condensed polycyclic organic pigment may be a product subjected to known treatment as appropriate after production, for example, a product subjected to pigment derivative treatment, surfactant treatment, rosin treatment, or resin treatment. Furthermore, the condensed polycyclic organic pigment may have pigment particle size, particle form, and particle surface charge adjusted and controlled for use in printing inks, paint, colored molded products, stationery, textile printing, toners, color filters, inkjet inks, and cosmetics.

(Carbon Black)

The carbon black is a kind of inorganic pigment and is contained in the resin alone or together with the condensed polycyclic organic pigment, if necessary. The carbon black may be a commercially available product or a product produced by known methods such as oxidation, contact, furnace, and thermal processes.

(Liquefied Solvent)

The liquefied solvent is preferably composed of one or both of liquid dimethyl ether and liquid propane, but may contain one or both of liquid dimethyl ether and liquid propane as a main component. The liquefied solvent may contain one or both of liquid dimethyl ether and liquid propane without departing from the object of the present invention. As used herein, the main component means that the total mass of liquid dimethyl ether and liquid propane is greater than 50% when the total mass of the liquefied solvent is 100%.

The liquefied solvent is preferably composed of one or two or more of liquid dimethyl ether, liquid propane, and liquid butane, but may contain one or two or more of liquid dimethyl ether, liquid propane, and liquid butane, or may contain them as main components. As used herein, the main component means that the total mass of liquid dimethyl ether, liquid propane, and liquid butane is greater than 50% when the total mass of the liquid solvent is 100%.

Thus, even when the colored resin composition containing a resin less soluble in liquid dimethyl ether, liquid propane, or liquid butane is treated, the solubility of the resin in the liquefied solvent can be increased, the colored resin composition containing various resins can be treated, and versatility and convenience can be enhanced.

FIG. 2 is a graph illustrating a saturation vapor pressure curve of dimethyl ether, which is an example of the liquefied solvent used in the present embodiment.

As illustrated in FIG. 2, the temperature is taken on the X axis in coordinates and the pressure at which dimethyl ether is liquefied is plotted on the Y axis with changing temperature, resulting in a liquidus line of dimethyl ether expressed in the following equation 1. In FIG. 2, the upper coordinates across the liquidus line indicate the region where dimethyl ether is liquid.

[Math 1]

$$P/Pc = \exp(Tc/T)(-7.112782\,\theta + 1.971239\,\theta^{1.5} - 2.276083\,\theta^{2.5} - 2.215774\,\theta^{5})$$

Equation 1

$$Tc(K) = 400.378$$
$$Pc(kPa) = 5,336.845$$
$$\theta = 1 - T/Tc$$

Source: Wu J, Zhou Y, Lemmon EW. An equation of state for the thermodynamic properties of dimethyl ether. J. Phys. Chem. Ref. Data, 2011;40: 023104.

Dimethyl ether is a compound with a boiling point of - 25.1°C under normal pressure and a specific gravity (20°C/4°C) of 0.66 in a liquefied state and exists as a gas under normal temperature and pressure. On the other hand, dimethyl ether has the property of liquefying at a low pressure of about 0.6 MPa at 25°C. As an organic compound, its molecular weight and molecular occupation radius are quite small. Taking advantage of these characteristics, in the present invention, the colored resin composition is brought into contact with liquid dimethyl ether under a condition in which dimethyl ether can exist as liquid, whereby the resin is dissolved into the liquid dimethyl ether and the organic pigment and the resin are separated.

Dimethyl ether has outstanding properties not found in ordinary organic solvents, in that it has almost no toxicity, produces almost no peroxide, is easily liquefied by pressurization and vaporized by depressurization, and is easily produced. Further, in liquid dimethyl ether, resins are dissolved but organic pigments or carbon black is hardly dissolved. Noting these properties, the inventor of the present invention contemplated using dimethyl ether to separate a colored resin composition. In addition, it was found for the first time that dimethyl ether can be used in a liquid state and that the resin in the colored resin composition can be easily dissolved in liquid dimethyl ether simply by bringing the liquid dimethyl ether into contact with the colored resin composition, and the organic pigment and the resin can be separated well.

Propane which is an alkane with a low molecular weight is a compound with a boiling point of -42.1°C at normal pressure and a specific gravity of 0.51 in a liquefied state and exists as gas under normal temperature and pressure. On the other hand, propane has the property of liquefying at a low pressure of about 0.86 MPa at 25°C. Further, in liquid propane, resins are dissolved but organic pigments or carbon black is hardly dissolved. Liquid propane which is a liquefied alkane with a low molecular weight therefore can be used as the liquefied solvent.

The main component of the liquefied solvent can be either liquid dimethyl ether or liquid propane, but liquid dimethyl ether is preferred in terms of resin solubility. However, the liquefied solvent is not limited to liquid dimethyl ether and/or liquid propane. Other liquefied solvents may be used as long as they have the properties of gasifying when pressurized at normal temperature or heated under normal pressure, and easily dissolving resins but hardly dissolving organic pigments or carbon black.

For example, n-butane which is another alkane with a low molecular weight is a compound with a boiling point of - 0.5°C under normal pressure and a specific gravity of 0.58 in a liquefied state and exists as gas under normal temperature and pressure. On the other hand, n-butane has the property of liquefying at a low pressure of about 0.18 MPa at 25°C.

Isobutane is a compound with a boiling point of -11.7°C under normal pressure and a specific gravity of 0.56 in a liquefied state and exists as gas under normal temperature and pressure. On the other hand, isobutane has the property of liquefying at a low pressure of about 0.25 MPa at 25°C.

Further, it is thought that in liquid n-butane or liquid isobutane, resins are dissolved but organic pigments or carbon black is hardly dissolved. Liquid butane (liquid n-butane and/or liquid isobutane) therefore can be used as the liquefied solvent, in the same manner as propane.

In this way, a liquefied solvent containing one or two of liquid propane and liquid butane as a main component can be used. In other words, liquefied petroleum gas containing a hydrocarbon with 3 or 4 carbon atoms as a main component can be used as the liquefied solvent.

In the present embodiment, it is preferable to use only liquid dimethyl ether, liquid propane, and/or liquid butane as the liquefied solvent, but other organic solvents can be used together, if necessary. Examples of such organic solvents include alcohols, ketones, aliphatic hydrocarbons, aromatic hydrocarbons, glycol ethers, halogenated hydrocarbons, and nitrogen-containing compounds. As organic solvents that can be homogeneously mixed with dimethyl ether, for example, benzene, toluene, xylene, hexane, heptane, octane, nonane, decane, undecane, dodecane, tridecane, tetradecane, cyclohexane, methylcyclohexane, chlorobenzene, nitrobenzene, tetrahydrofuran, ethanolamine, aniline, pyridine, dimethylformamide, dimethyl sulfoxide, N-methylpyrrolidone, trichloroethylene, tetrachloroethylene, cellosolve acetate, butyl acetate, acetone, ketone solvents such as methyl ethyl ketone, alcohol solvents such as methanol, ethanol, butanol, propanol, and isopropanol, glycol solvents such as ethylene glycol and diethylene glycol, glycol monoalkyl ethers such as ethylene glycol monoalkyl ether, diethylene glycol monoalkyl ether, triethylene glycol monoalkyl ether, propylene glycol monoalkyl ether, and dipropylene glycol monoalkyl ether, light oil, animal and vegetable oils, and the like can be used. Liquid dimethyl ether and/or the organic solvents used together with liquid dimethyl ether may be used singly or may be used in a combination of two or more. As the other organic solvents described above, it is preferable to use organic solvents that can be homogeneously mixed with dimethyl ether and/or propane.

In the present embodiment, it is preferable that the organic solvents used together have a boiling point as low as possible in terms of ease of distillation. The organic solvents used together can be separated and recovered or reused, for example, by evaporation, using the difference in boiling points between the organic solvents used together and dimethyl ether and/or propane. Among others, it is more preferable to be easily separated from dimethyl ether and/or propane and have a boiling point as low as possible.

(Resin)

The condensed polycyclic organic pigment can be added to various resins depending on the applications. The resin contained in the colored resin composition is not limited and can be one or two or more of known resins.

For example, when the condensed polycyclic organic pigment is used for printing ink, the printing ink can contain a binder resin, a solvent, a pigment, various additives, and the like.

Examples of the binder resin include nitrocellulose resins, polyamide resins, polyurethane resins, and acrylic resins.

When the condensed polycyclic organic pigment is used as a colorant in paint, examples of resin used as the paint include acrylic resins, melamine resins, epoxy resins, polyester resins, polyurethane resins, polyamide resins, and phenolic resins.

When the condensed polycyclic organic pigment is used for a colored plastic molded product, examples include polyvinyl chloride resins, polyethylene resins, polypropylene resins, acrylonitrile butadiene styrene resins (ABS resins), polystyrene resins, polyethylene terephthalate resins (PET resins), and nitrile rubber.

In the method for separating a colored resin composition according to the present embodiment, one or two or more of gaseous dimethyl ether, gaseous propane, and gaseous butane obtained by vaporizing one or two or more of liquid dimethyl ether, liquid propane, and liquid butane may be refluxed and used as one or two or more of liquid dimethyl ether, liquid propane, and liquid butane in the step of producing the liquefied solvent.

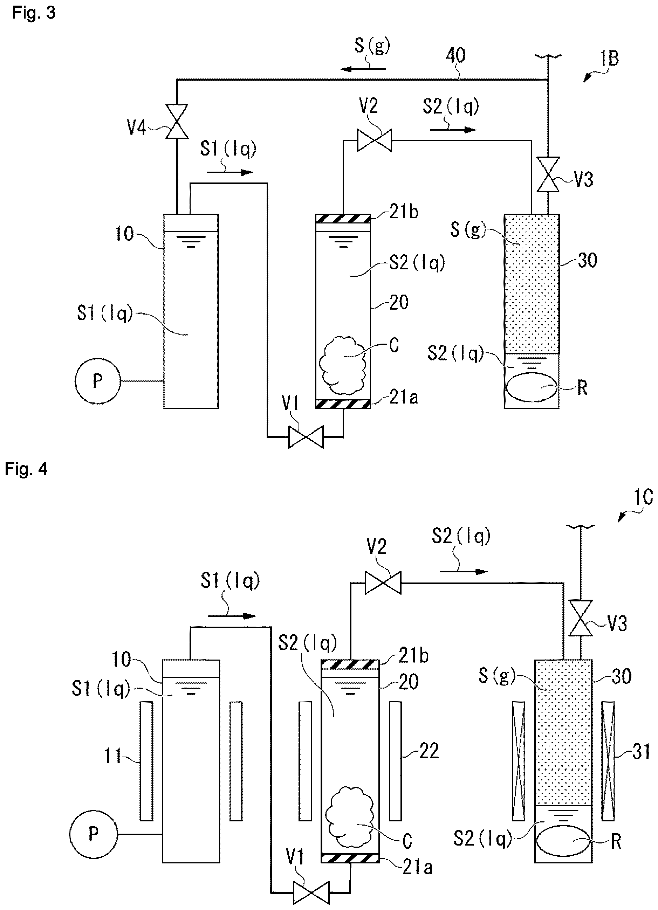

FIG. 3 is a schematic diagram illustrating a modification of the separation device 1A of FIG. 1. In FIG. 3, an example in which liquid dimethyl ether or liquid propane is used as the liquefied solvent in the same manner as in FIG. 1 will be described.

As illustrated in FIG. 3, a separation device 1B has a flow path 40 that connects the recovery section 30 to the supply section 10 through the valve V3 and a valve V4 and delivers the vaporized solvent S composed of gaseous dimethyl ether or gaseous propane generated in the recovery section 30 to the supply section 10. The recovery section 30 and the supply section 10 are communicatively connected in an airtight manner, and the vaporized solvent S generated in the recovery section 30 is delivered to the supply section 10 while being kept in the gaseous state. The vaporized solvent S generated in the recovery section 30 may be partially delivered to the supply section 10 through the flow path 40 or may be entirely delivered to the supply section 10 through the flow path 40.

According to the present modification, the vaporized solvent S composed of gaseous dimethyl ether or gaseous propane obtained by separation of the colored resin composition C is refluxed and used as the liquefied solvent S1 used in the present separation method, so dimethyl ether or propane can be circulated and reused as it is. This can reduce the amount of liquefied solvent required for the separation process, eliminates the need for pretreatment for reusing the liquefied solvent, and can reduce the amount of waste, thereby implementing a simple, low-cost, and environmentally friendly separation method.

FIG. 4 is a schematic diagram illustrating another modification of the separation device 1A of FIG. 1. In FIG. 4, an example in which liquid dimethyl ether or liquid propane is used as the liquefied solvent in the same manner as in FIG. 1 will be described.

In the supply section 10 in the separation device 1A in FIG. 1, gaseous dimethyl ether or gaseous propane is liquefied under pressure. However, embodiments are not limited to this, and gaseous dimethyl ether or gaseous propane may be cooled to generate the liquefied solvent S1 composed of liquid dimethyl ether or liquid propane.

For example, in a separation device 1C in FIG. 4, the supply section 10 may be provided with a cooling section 11 that cools gaseous dimethyl ether or gaseous propane under normal pressure. When the liquefied solvent S1 is composed of liquid dimethyl ether or liquid propane, the cooling temperature can be -45 to 40°C. In this case, the cooling temperature for liquefaction can be increased by applying pressure with the pump P before the supply section 10. In this case, the treatment section 20 can be provided with a cooling section 22 that cools gaseous dimethyl ether or gaseous propane under normal pressure. Further, the recovery section 30 can be provided with a heating section 31 that heats gaseous dimethyl ether or gaseous propane under normal pressure to bring it back to normal temperature.

According to the present modification as well, by using the state change with temperature, the resin R is dissolved from the colored resin composition C containing a condensed polycyclic organic pigment and/or carbon black, using the liquefied solvent S1 composed of liquid dimethyl ether or liquid propane, and the condensed polycyclic organic pigment and/or carbon black and the resin R can be separated.

Further, the liquefied solvent S1 composed of liquid dimethyl ether or liquid propane may be generated by pressurizing and cooling gaseous dimethyl ether or gaseous propane in the supply section 10, or the liquefied solvent S1 may be brought into contact with the colored resin composition C under pressure and under cooling to dissolve the resin R in the colored resin composition C into the liquefied solvent S1 in the treatment section 20. This ensures that gaseous dimethyl ether or gaseous propane is liquefied before the condensed polycyclic organic pigment and/or carbon black and the resin R are separated.

[Examples]

Examples of the present invention will be described below, but the present invention is not limited to the following examples.

(Reference Examples)

To determine the solubility of resin in dimethyl ether, colorless resin pellets with no pigment blended were charged into a cylindrical narrow tube (column) 20 illustrated in FIG. 1. Approximately 50 ml of dimethyl ether was supplied at a flow rate of about 10 ml/ml from the supply section 10 in FIG. 1. The residence contact time of dimethyl ether with the resin in the column was approximately 30 seconds. The weight of the resin left in the column after pressure release was measured to determine change in weight of the resin between before and after contact. The results for several resins are listed in Table 1.

[Table 1]

| Resin pellets | Column packing volume (g) | Volume recovered (g) | Weight loss ratio (%) |
|---|---|---|---|
| Low-density polyethylene (LDPE) | 5.50 | 5.48 | 0.36% |
| High-density polyethylene (HDPE) | 6.15 | 6.09 | 0.98% |
| Polyethylene terephthalate (PET) | 9.07 | 8.97 | 1.10% |
| Polypropylene (PP) | 5.37 | 5.36 | 0.19% |
| Nylon 6 (PA6) | 7.44 | 7.36 | 1.08% |

(continued)

| Resin pellets | Column packing volume (g) | Volume recovered (g) | Weight loss ratio (%) |
|---|---|---|---|
| Polyvinyl chloride (PVC) | 6.24 | 5.47 | 12.34% |

Polyvinyl chloride showed a large weight loss after only one pass of dimethyl ether. For the other resins, the number of times of liquid pass (amount of solvent) may be designed according to the solubility.

(Example 1)

In a pressure-resistant container (treatment section) which was a cylindrical narrow tube (column) with filters placed on top and bottom, 4.2 g of a colored resin composition in which a dimethylquinacridone pigment (C.I. Pigment Red 122) was blended in polyvinyl chloride resin at a ratio of 0.5% by weight was charged. An experimental apparatus was assembled by providing valves V1 and V2 that can be opened and closed to install piping before and after the pressure-resistant container, and attaching a pressure-resistant container (supply section) for supplying liquid dimethyl ether with a pressure pump and a pressure-resistant container (recovery section) for recovering the passed liquid dimethyl ether. With the valve V1 opened, liquid dimethyl ether was supplied from the pressure-resistant container (supply section) for supplying liquid dimethyl ether to the bottom of the pressure-resistant container (treatment section) filled with the colored resin composition. The total amount of 300 mL was divided so that approximately 50 mL of liquid was passed at a time, and liquid dimethyl ether was passed from the bottom toward the top of the pressure-resistant container (treatment section) six times. Dimethyl ether liquefied at a temperature of 35°C and 0.8 MPa was used as the above liquid dimethyl ether, and containers that did not have such pressure resistance or strength that is required to treat supercritical carbon dioxide were used as the pressure-resistant containers.

Each time liquid dimethyl ether was passed, the valve V1 between the pressure-resistant container (supply section) and the pressure-resistant container (treatment section) was closed, while the valve V2 between the pressure-resistant container (treatment section) and the pressure-resistant container (recovery section) was opened, and it was confirmed that liquid dimethyl ether in the pressure-resistant container (treatment section) was recovered into the pressure-resistant container (recovery section). This operation was repeated, and after pass of the total amount of liquid was completed, the inside of the apparatus including the pressure-resistant container (treatment section) filled with the colored resin composition was returned to normal temperature and pressure. The filters were removed from the pressure-resistant container (treatment section), and the residue of the colored resin composition that had been brought into contact with dimethyl ether was removed from the pressure-resistant container (treatment section). It was confirmed that in the residue left in the treatment section, the dimethylquinacridone pigment was more concentrated than in the colored resin composition. The liquid dimethyl ether recovered in the pressure-resistant container (recovery section) was returned to normal temperature and pressure and thereby vaporized, and the gaseous dimethyl ether was removed. Solid polyvinyl chloride resin was left in the pressure-resistant container (recovery section). The solid resin left in the pressure-resistant container (recovery section) was virtually uncolored, and the dimethylquinacridone pigment and the polyvinyl chloride resin were separated almost completely.

(Comparative Example 1)

A colored resin composition was separated in the same manner as in Example 1, except that a disazo pigment (C.I. Pigment Yellow 14) was used instead of the dimethylquinacridone pigment (C.I. Pigment Red 122).

As a result, the liquid dimethyl ether recovered in the pressure-resistant container (recovery section) was returned to normal temperature and pressure and thereby vaporized, and the gaseous dimethyl ether was removed. However, the solid resin left in the pressure-resistant container (recovery section) was colored in yellow due to dissolution of the disazo pigment into the resin, and the disazo pigment and the polyvinyl chloride resin were not sufficiently separated.

(Comparative Example 2)

With reference to Example 1 in Japanese Patent No. 3972516, a mixed organic solvent (N-methyl-2-pyrrolidone:N,N-dimethylacetamide:diethylene glycol dimethyl ether = 45:45:10) was used instead of liquid dimethyl ether, and 1.0 g of a colored resin composition with 0.5% of a dimethylquinacridone pigment blended into a polystyrene resin was stirred at room temperature using 900 ml of the mixed organic solvent to separate the colored resin composition.

As a result, the polystyrene resin was dissolved and separated from the colored resin composition, but the mixed solvent layer was slightly colored. Furthermore, the amount of energy required to evaporate the high-boiling solvent to recover the resin from this polystyrene resin solution was larger than in Example 1, and the usability was inferior.

In addition, a rectifying column for fractional distillation of the solvent was required to reuse the mixed solvent, and the cost efficiency was inferior.

Industrial Applicability

The method for separating a colored resin composition of the present invention enables efficient recycling of a colored resin composition and therefore can be suitably used as a separation method for colored plastic products widely used in various fields, such as vehicles, electronics, and construction materials.

In particular, the method is extremely useful as a separation method and a resin recycling method for printing inks such as offset inks, gravure inks, and flexo inks; paint such as lacquer and baking paint; molded products of polyolefin, thermoplastic polyester, and the like; and high-tech components such as jet inks, color filters, and electrophotographic powder toners.

Reference Signs List

| 1A | separation device |
| 1B | separation device |
| 1C | separation device |
| 10 | supply section |
| 11 | cooling section |
| 20 | treatment section |
| 21a | filter |
| 21b | filter |
| 22 | cooling section |
| 30 | recovery section |
| 31 | heating section |
| 40 | flow path |

**Claims**

1. A method for separating a colored resin composition, the method comprising dissolving a resin from a colored resin composition containing a condensed polycyclic organic pigment and/or carbon black into a liquefied solvent containing one or two or more of liquid dimethyl ether, liquid propane, and liquid butane, and separating the condensed polycyclic organic pigment and/or carbon black and the resin.

2. The method for separating a colored resin composition according to claim 1, wherein the condensed polycyclic organic pigment is composed of one or two or more selected from phthalocyanine pigments, quinacridone pigments, dioxazine pigments, perylene pigments, perinone pigments, isoindolinone pigments, isoindoline pigments, thioindigo pigments, anthraquinone pigments, quinophthalone pigments, diketopyrrolopyrrole pigments, and metal complex pigments.

3. The method for separating a colored resin composition according to claim 1 or 2, the method comprising:

    a step of liquefying one or both of gaseous dimethyl ether and gaseous propane under pressure to generate the liquefied solvent containing one or both of liquid dimethyl ether and liquid propane as a main component;
    a step of bringing the liquefied solvent into contact with the colored resin composition to dissolve the resin in the colored resin composition into the liquefied solvent; and
    a step of vaporizing one or both of liquid dimethyl ether and liquid propane contained in the liquefied solvent in which the resin is dissolved, under pressure release, to leave the resin.

4. The method for separating a colored resin composition according to claim 1 or 2, wherein the liquefied solvent is composed of one or both of liquid dimethyl ether and liquid propane.

5. The method for separating a colored resin composition according to claim 1 or 2, wherein the liquefied solvent is generated at a pressure of 0.1 MPa or more and 1.0 MPa or less.

6. The method for separating a colored resin composition according to claim 1 or 2, wherein one or two or more of gaseous dimethyl ether, gaseous propane, and gaseous butane obtained by vaporizing one or two or more of the liquid dimethyl ether, the liquid propane, and the liquid butane are refluxed and used as one or two or more of liquid dimethyl ether, liquid propane, and liquid butane in the step of producing the liquefied solvent.

7. A resin recycling method in which a new resin composition is produced using a resin obtained by the method for separating a colored resin composition according to claim 1 or 2.

8. The resin recycling method according to claim 7, wherein the new resin composition is a colored resin composition.

Fig. 1

Fig. 2

Fig. 3

Fig. 4

## INTERNATIONAL SEARCH REPORT

| International application No. |
| --- |
| **PCT/JP2022/018352** |

### A. CLASSIFICATION OF SUBJECT MATTER

*C08J 11/08*(2006.01)i; *C09B 67/54*(2006.01)i
FI:   C08J11/08; C09B67/54 Z ZAB

According to International Patent Classification (IPC) or to both national classification and IPC

### B. FIELDS SEARCHED

Minimum documentation searched (classification system followed by classification symbols)

C08J11/08; C09B67/54

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-513458 A (THE PROCTER & GAMBLE COMPANY) 14 May 2020 (2020-05-14) claims 1-2, paragraphs [0054]-[0058], [0065], [0082]-[0083], [0090] | 1-6 |
| Y | | 7-8 |
| Y | WO 2020/213032 A1 (SHINTECH CORPORATION) 22 October 2020 (2020-10-22) claim 1, paragraphs [0014], [0062], [0066] | 7-8 |
| A | JP 2017-522444 A (WORN AGAIN FOOTWEAR AND ACCESSORIES LIMITED) 10 August 2017 (2017-08-10) entire text | 1-8 |
| A | JP 2000-038470 A (SONY CORP) 08 February 2000 (2000-02-08) entire text | 1-8 |
| A | JP 2018-016741 A (DAINIPPON INK & CHEMICALS) 01 February 2018 (2018-02-01) entire text | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 June 2022** | **12 July 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/018352**

| Patent document cited in search report | | | Publication date (day/month/year) | Patent family member(s) | | | Publication date (day/month/year) |
|---|---|---|---|---|---|---|---|
| JP | 2020-513458 | A | 14 May 2020 | US | 2018/0171096 | A1 | |
| | | | | paragraphs [0063]-[0067], [0074], [0091], [0098], claims 1-2 | | | |
| | | | | EP | 3339361 | A1 | |
| | | | | CN | 110072927 | A | |
| WO | 2020/213032 | A1 | 22 October 2020 | CN | 113508153 | A | |
| | | | | JP | 6659919 | B1 | |
| JP | 2017-522444 | A | 10 August 2017 | US | 2017/0218162 | A1 | |
| | | | | GB | 2528494 | A | |
| | | | | WO | 2016/012755 | A1 | |
| | | | | EP | 3172267 | A1 | |
| JP | 2000-038470 | A | 08 February 2000 | US | 6169121 | B1 | |
| | | | | CA | 2274397 | A1 | |
| JP | 2018-016741 | A | 01 February 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018016741 A

- JP 3972516 B

**Non-patent literature cited in the description**

- **WU J ; ZHOU Y ; LEMMON EW.** An equation of state for the thermodynamic properties of dimethyl ether. *J. Phys. Chem. Ref. Data,* 2011, vol. 40, 023104